# EUROPÄISCHE PATENTSCHRIFT

(11) **EP 1 698 853 B1**
(45) Veröffentlichungstag und Bekanntmachung des Hinweises auf die Patenterteilung: **16.01.2008**
(21) Anmeldenummer: 06450028.3
(22) Anmeldetag: 02.03.2006
(51) Int. Cl.: G01B 5/24

(54) **Verfahren zur Messung der Planparallelität von Flächen eines Prüfobjekts**
Method for measuring the plane parallelism of surfaces of a test object
Procédé pour mesurer le parallélisme entre des surfaces d'un objet

(30) Priorität: 03.03.2005 AT 3642005
(43) Veröffentlichungstag der Anmeldung: 06.09.2006
(73) Patentinhaber: Prantl, Manfred, 8010 Graz (AT); Scherer, Stefan, 8010 Graz (AT)
(72) Erfinder: Prantl, Manfred, 8010 Graz (AT); Scherer, Stefan, 8010 Graz (AT)
(74) Vertreter: Margotti, Herwig Franz

(56) Entgegenhaltungen:
- EP-A- 0 908 698
- US-A- 5 363 709
- VANNONI M ET AL: "Joint interferometric measurement of planarity and parallelism" OPTICAL ENGINEERING SPIE USA, Bd. 43, Nr. 5, Mai 2004 (2004-05), Seiten 1215-1220, XP002378309 ISSN: 0091-3286

## Beschreibung

Die Erfindung betrifft ein Verfahren zur Messung der Planparallelität von Flächen eines Prüfobjekts, umfassend das Vermessen der Flächen des Prüfobjekts mittels zumindest eines Abstandssensors.

In vielen technischen Bereichen ist es notwendig Bauteile herzustellen und zu überprüfen, die Flächen mit genau definierter Planparallelität aufweisen müssen. Unter Planparallelität versteht man hierbei, dass die Flächen möglichst eben sind und möglichst parallel zueinander liegen. Die Vermessung solcher Bauteile gestaltet sich dann sehr schwierig, wenn die zu vermessenden Flächen nicht von einem Sensor aus sichtbar sind, weil sie z.B. auf verschiedenen Seiten des Bauteils liegen. Ein typischer Anwendungsfall wäre hierbei z.B. die Vermessung von gegenüberliegenden Seiten eines Quaders.

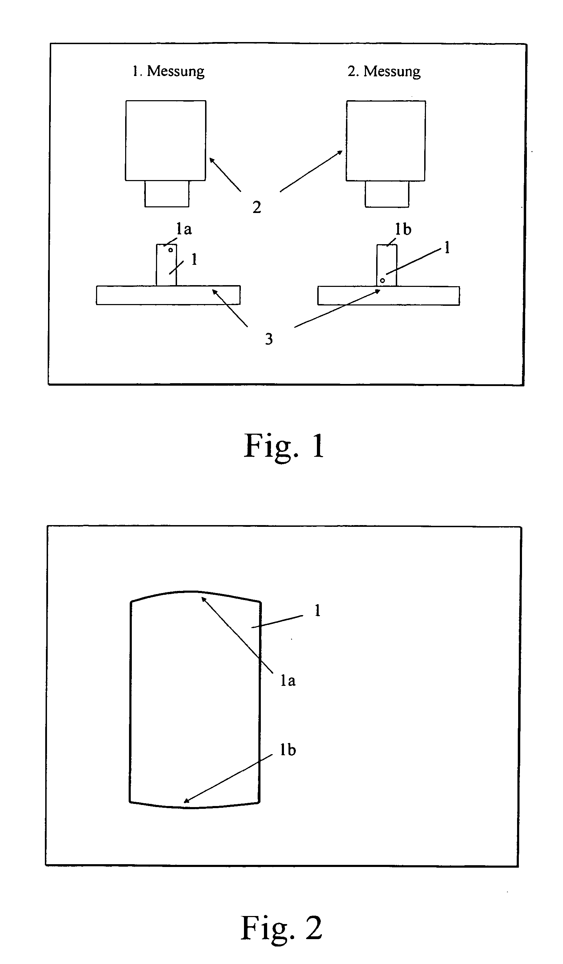

Bisher wird, wie in Fig. 1 dargestellt, eine derartige Aufgabenstellung üblicherweise dadurch gelöst, dass ein Prüfobjekt 1 wie das oben genannte Bauteil auf einer ebenen Grundplatte 3 platziert wird, dann wird in einer ersten Messung mittels eines Abstandssensors 2 zunächst eine Seite 1a des Prüfobjekts 1 vermessen, das Prüfobjekt 1 dann gedreht und in einer zweiten Messung die andere Seite 1b vermessen. Anschließend wird auf rechnerische Weise der Winkel zwischen den vermessenen Flächen 1a, 1b berechnet und festgestellt, ob eine vordefinierte Planparallelität eingehalten wird. Die Vermessung der Flächen 1a, 1b erfolgt hierbei mit verschiedenen Messmethoden, entweder indem der Abstandssensor 2 als Punktabstandssensor ausgebildet ist und an ausgewählten Orten auf der Fläche 1a, 1b einzelne Punkte vermessen werden, oder indem der Abstandssensor 2 als Flächenabstandssensor ausgebildet ist und damit flächenhaft über die gesamte Fläche des Prüfobjekts gemessen wird. Bei punktuell messenden Abstandssensoren 2 ist eine Relativbewegung zwischen Prüfobjekt 1 und Sensor 2 notwendig.

Die in Fig. 1 angeführte Methode der Vermessung der Planparallelität funktioniert bei sehr hohen Genauigkeitsanforderungen allerdings nur dann, wenn die zu vermessenden Flächen 1a, 1b des Prüfobjekts 1 eben sind. Handelt es sich allerdings um ein Prüfobjekt 1, wie in Fig. 2 gezeigt, das eine nicht zu vernachlässigende Krümmung an den zu vermessenden Flächen 1a, 1b aufweist, so versagt obige Methode, da ein solches Prüfobjekt nicht in einer definierten Lage zum Abstandssensor platziert werden kann.

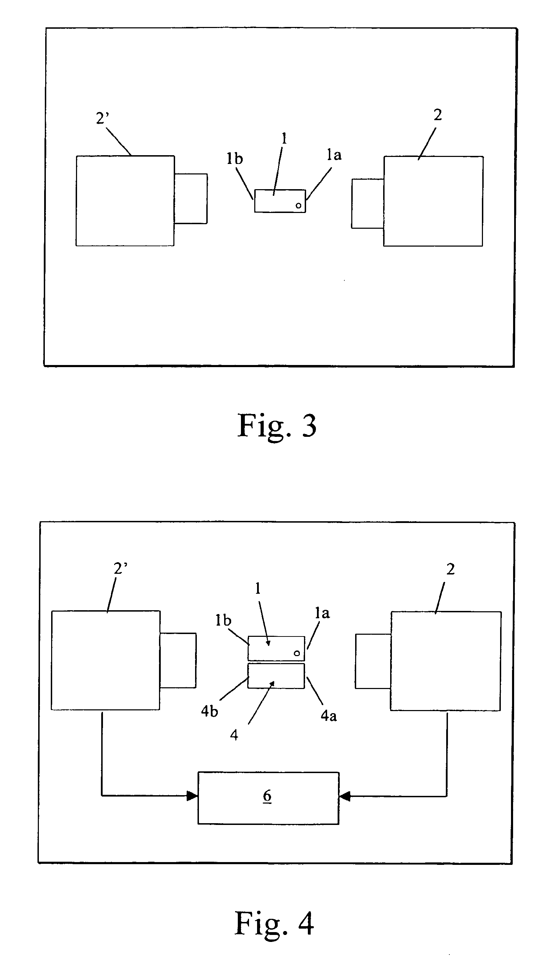

Um auch Prüfobjekte, wie in Fig. 2 gezeigt, auf Planparallelität vermessen zu können, ist es notwendig die Messung mit zwei Abstandssensoren 2, 2' auf beiden Seiten 1a, 1b des Prüfobjekts 1 durchzuführen, wie in Fig. 3 schematisch gezeigt. Hierbei können wie bei der einseitigen Messung flächenhaft messende Abstandssensoren 2, 2' oder punktuell messende Abstandssensoren 2, 2' zum Einsatz kommen. Die Planparallelität solcher unvollkommen ebenen Flächen 1a, 1b eines Prüfobjekts 1 wird dann üblicherweise definiert als die Planparallelität von Ausgleichsebenen, die mathematisch aus den Messpunkten der jeweiligen Flächen 1a, 1b errechnet werden (meist als Ausgleichsebenen im Sinne der kleinsten Fehlerquadrate).

Um mit dieser Methode allerdings eine Planparallelitätsmessung durchführen zu können, ist es notwendig die genaue Orientierung der Abstandssensoren 2, 2' zueinander zu kennen. Erst dann kann aus der Verknüpfung der Messungen der beiden Abstandssensoren 2, 2' auf die Planparallelität der Prüfobjektflächen geschlossen werden. Wenn die Genauigkeitsanforderungen an die Messung allerdings in den Submikrometer Bereich gehen, ist es mechanisch nur mit sehr großem Aufwand, wenn überhaupt, möglich die Abstandssensoren 2, 2' genau aufeinander auszurichten.

Der vorliegenden Erfindung liegt die Aufgabe zugrunde, eine Lösung für die geschilderten Probleme des Standes der Technik anzubieten. Die Erfindung löst diese Aufgabe auf elegante und einfache Weise durch Bereitstellen eines Verfahrens zur Messung der Planparallelität von Flächen eines Prüfobjekts gemäß den Merkmalen des Anspruchs 1. Vorteilhafte Ausgestaltungen der Erfindung sind in den abhängigen Ansprüchen.

Der Ansatz des erfindungsgemäßen Verfahrens beruht darauf, dass anstatt nur die zu untersuchenden Flächen zu vermessen, bei der Messung der Planparallelität auch ein Kalibrationsobjekt mitvermessen wird. Dieses Kalibrationsobjekt ist ein präzise hergestelltes Teil, z.B. ein Quader, bei dem die Referenzflächen eine weit über der notwendigen Messgenauigkeit liegende Ebenheit und Planparallelität aufweisen.

Das vorgeschlagene Verfahren weist folgende wesentliche Vorzüge gegenüber der klassischen Messung der Planparallelität auf:
1. Messungen von Prüfobjekten auch an Flächen, die eine nicht zu vernachlässigende Krümmung aufweisen und deshalb nicht stabil auf einer Referenzfläche platziert werden können.
2. Automatische Selbstkalibrierung bei jeder Messung. Schwankungen in der Ausrichtung der Abstandssensoren zueinander werden mithilfe des Kalibrationsobjekts kompensiert.
3. Kostengünstiger mechanischer Aufbau, da die erforderliche Messgenauigkeit über das Kalibrationsobjekt erreicht wird.

Der Vorteil eines kostengünstigen mechanischen Aufbaus ergibt sich dadurch, dass in einer Ausgestaltung der Erfindung das Vermessen der Flächen des Prüfobjekts und das Vermessen der Referenzflächen des Kalibrationsobjekts mittels zweier Abstandssensoren erfolgt, wobei anhand der bei dem Vermessen der Referenzflächen des Kalibrationsobjekts gewonnenen Messdaten die Ausrichtung der beiden Abstandssensoren zueinander ermittelt wird und die Planparallelität der Flächen des Prüfobjekts durch das Miteinander-in-Bezug-Setzen der Messungen der Flächen des Prüfobjekts unter Berücksichtigung der ermittelten Ausrichtung der Abstandssensoren zueinander errechnet wird.

Es ist nicht erforderlich, vor jedem Vermessen eines Prüfobjekts die Referenzflächen des Kalibrationsobjekts zu vermessen und daraus die Orientierung der Abstandssensoren zu ermitteln. Sofern sichergestellt ist, dass es zwischen den Messungen von Prüfkörpern zu keiner Verschiebung der relativen Orientierung der Abstandssensoren kommt, genügt es, die Kalibrierungsmessung einmal durchzuführen und sie optional in größeren zeitlichen Intervallen zu wiederholen.

In einer alternativen Ausführungsform der Erfindung werden die Flächen des Prüfobjekts und die Referenzflächen des Kalibrationsobjekts gemeinsam mittels eines einzelnen Abstandssensors vermessen, wobei das Prüfobjekt und das Kalibrationsobjekt starr zueinander in einen räumlichen Bezug gesetzt werden. Dann wird eine Vermessung einer ersten Fläche des Prüfobjekts und einer ersten Referenzfläche des Kalibrationsobjekts durchgeführt, anschließend der Abstandssensor relativ zum Prüfobjekt und zum Kalibrationsobjekt bewegt, z.B. durch gemeinsames Drehen des Prüfobjekts mit dem Kalibrationsobjekt in Bezug auf den Abstandssensor, und darauf eine Vermessung einer zweiten Fläche des Prüfobjekts und einer zweiten Referenzfläche des Kalibrationsobjekts durchgeführt. Der starre räumliche Bezug zwischen Prüfobjekt und Kalibrationsobjekt wird vorteilhaft durch ein Kopplungselement, wie eine Zwinge, das die beiden Objekte lösbar miteinander verbindet, hergestellt.

In einer Ausgestaltung der Erfindung sind die Abstandssensoren als Punktsensoren ausgebildet. Zur Vermessung der Flächen des Prüfobjekts und der Referenzflächen des Kalibrationsobjekts werden einzelne Punkte der Flächen und der Referenzflächen vermessen, indem zwischen jeder Messung eine Relativbewegung zwischen den Abstandssensoren und den Flächen bzw. den Referenzflächen ausgeführt wird. Vorteilhaft werden aus den erfassten Messpunkten der Flächen des Prüfobjekts und der Referenzflächen des Kalibrationsobjekts Ausgleichsebenen errechnet, die für die Ermittlung der Planparallelität der Flächen bzw. der Ermittlung der Ausrichtung der Abstandssensoren herangezogen werden.

In wiederum einer anderen Ausgestaltung der Erfindung sind die Abstandssensoren als Flächensensoren ausgebildet, so dass keine Relativbewegung zwischen dem Prüfobjekt bzw. dem Kalibrationsobjekt und den Abstandssensoren erforderlich ist.

Zweckmäßig, weil mit hoher Genauigkeit bei vertretbaren Kosten herstellbar, ist das Kalibrationsobjekt als Quader ausgebildet, bei dem zwei gegenüberliegende Flächen als Referenzflächen ausgebildet sind.

Abgesehen von der Messung der Planparallelität von Flächen können mit der Erfindung auch Messungen der Planarität (Ebenheit von Flächen) und Messungen der Parallelität von Ebenen durchgeführt werden.

Die Erfindung wird nun anhand von nicht einschränkenden Ausführungsbeispielen unter Bezugnahme auf die Zeichnungen näher erläutert.

In den Zeichnungen zeigen Fig. 1 schematisch eine Messvorrichtung zur Messung der Planparallelität von Prüfobjekten mit einem Abstandssensor,
Fig. 2 ein Prüfobjekt mit unebenen Flächen,
Fig. 3 eine Messvorrichtung zur Messung der Planparallelität von Prüfobjekten mit zwei Abstandssensoren,
Fig. 4 die Durchführung des erfindungsgemäßen Verfahrens in einer Messvorrichtung zur Messung der Planparallelität von Prüfobjekten mit zwei Abstandssensoren,
Fig. 5 in der Perspektive ein praktisches Ausführungsbeispiel der Messvorrichtung von Fig. 4, und
Fig. 6 die Durchführung des erfindungsgemäßen Verfahrens in einer Messvorrichtung zur Messung der Planparallelität von Prüfobjekten mit einem Abstandssensor.

Zunächst auf Fig. 4 Bezug nehmend ist darin eine Messvorrichtung mit einander gegenüberliegenden Abstandssensoren 2, 2' zur Messung der Planparallelität von Flächen 1a, 1b eines Prüfobjekts 1 dargestellt. Erfindungsgemäß werden vor der eigentlichen Vermessung der zu untersuchenden Flächen 1a, 1b Referenzflächen 4a, 4b eines Kalibrationsobjekts 4 vermessen. Dieses Kalibrationsobjekt 4 ist ein präzise hergestelltes Teil, z.B. ein Quader, bei dem die Referenzflächen 4a, 4b eine weit über der notwendigen Messgenauigkeit liegende Ebenheit und Planparallelität aufweisen.

Da die Referenzflächen 4a, 4b bei diesem Kalibrationsobjekt 4 aufgrund der extrem hohen Genauigkeit ihrer Herstellung als eben anzusehen sind, kann das Kalibrationsobjekt 4 z.B. mit der in Fig. 1 gezeigten Messvorrichtung vermessen werden und somit sichergestellt werden, dass es den Genauigkeitsanforderungen genügt.

Da nun von diesem Kalibrationsobjekt 4 bekannt und gegebenenfalls durch eine Messung in der Messvorrichtung gemäß Fig. 1 auch überprüft ist, dass seine Referenzflächen 4a, 4b eben sind und genau parallel zueinander liegen, kann aus den Vermessungen des Kalibrationsobjekts 4 in der Messvorrichtung gemäß Fig. 4 die Orientierung der beiden Abstandssensoren 2, 2' zueinander mithilfe eines Rechners 6 errechnet werden. Dazu müssen die Koordinatensysteme dieser beiden Abstandssensoren 2, 2' aneinander angeglichen werden. Für die Angleichung der Koordinatensysteme wird von der oben beschriebenen Vermessung des Kalibrationsobjekts 4 Gebrauch gemacht, das aufgrund der hohen Genauigkeit seiner Herstellung als Planheitsnormal verwendet werden kann.

Im Folgenden wird die Ableitung dieses Angleichs für zwei Punkt-Abstandssensoren 2, 2' erläutert, wobei das Kalibrationsobjekt 4 (Planheitsnormal) über eine x, y Verschubeinheit relativ zu diesen Sensoren 2, 2' bewegt wird.

Gegeben seien folgende Messwerte (durch Messung auf die Stirnflächen des Planheitsnormals):
*xᵢ, yᵢ, z_{1_i}* ... Messwerte für ersten Sensor 2
*xᵢ, yᵢ, z_{2_i}* ... Messwerte für zweiten Sensor 2'

Da diese Messwerte von Messungen auf ebene Flächen stammen, kann nun für jeden Sensor 2, 2' getrennt eine Ausgleichsebene errechnet werden. Die Orientierung dieser Ausgleichsebene wird beschrieben durch zwei Normalvektoren *̅n̅*̅₁, *̅n̅*̅₂.

Durch die unvollkommene mechanische Ausrichtung der Sensoren zueinander werden diese Normalvektoren *̅n̅*̅₁, *̅n̅*̅₂ im Allgemeinen nicht parallel zueinander stehen. Aufgrund der hohen Fertigungsgenauigkeit des Kalibrationsobjekts 4 (Planheitsnormal) kann als gegeben angenommen werden, dass diese Normalvektoren von Flächen stammen, die faktisch parallel zueinander sind. Außerdem ist die Bedingung zutreffend, dass diese Flächen einen genau definierten Abstand zueinander haben.

Aufgrund dieser Zusatzinformation kann nun eine Korrekturrechnung erfolgen, sodass alle Messwerte des ersten Sensors 2 und des zweiten Sensors 2' so in ein einheitliches Koordinatensystem transformiert werden, dass, wenn auf das Planheitsnormal gemessen wird, die transformierten Messwerte des ersten Sensors 2 parallel zu den transformierten Messwerten des zweiten Sensors 2' liegen und außerdem die zugehörigen Ausgleichsebenen voneinander den Abstand aufweisen, der dem Planheitsnormal entspricht.

Die so ermittelte Koordinatentransformation wird gespeichert und auf die Messwerte angewandt, die bei der Vermessung des aktuellen Prüfobjekts 1 entstehen. Damit sind auch diese Messwerte in ein einheitliches Koordinatensystem gebracht und es kann die Planparallelität des Prüfobjekts 1 errechnet werden, indem die Messergebnisse an den Flächen 1a, 1b des Prüfobjekts 1 in Relation zueinander gesetzt werden und daraus mithilfe des Rechners 6 die Planparallelität der Flächen 1a, 1b mit hoher Genauigkeit bestimmt wird. Weiters ist anzumerken, dass im Falle der Anordnung von Fig. 4 es nicht zwingend notwendig ist, bei jeder Messung das Kalibrationsobjekt 4 zu vermessen. Man kann darauf verzichten, wenn sichergestellt ist, dass es zwischen den Messungen zu keiner Veränderung der relativen Orientierung zwischen den Sensoren 2, 2' kommt.

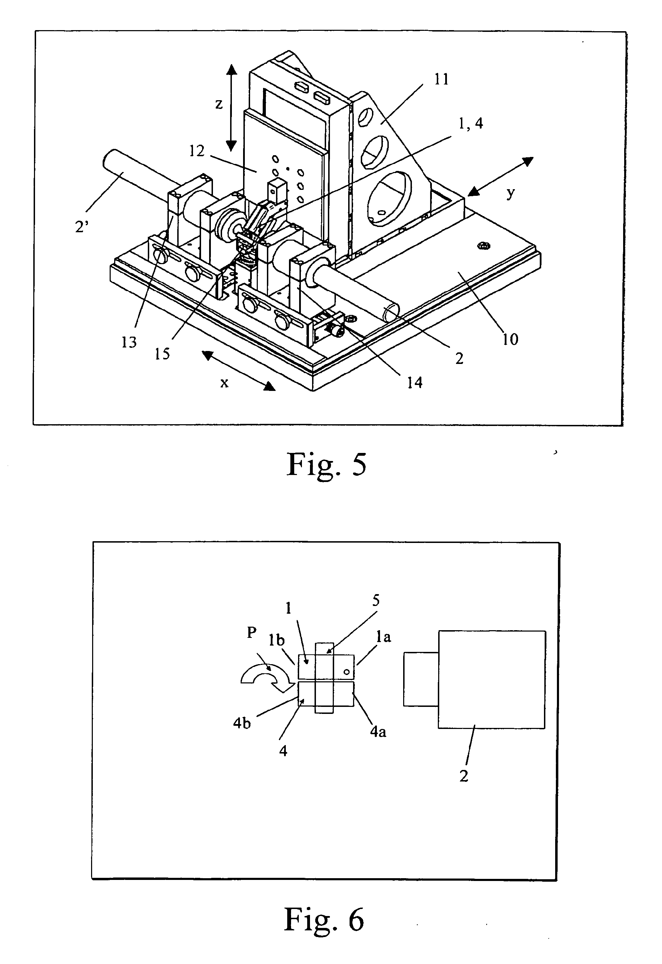

Fig. 5 zeigt eine praktische Ausführung der in Fig. 4 schematisch dargestellten Messvorrichtung für die Planparallelitätsmessung eines Prüfobjekts, z.B. eines Keramikteiles. Bei dieser Ausführung kommen als Abstandssensoren 2, 2' zwei punktuell messende Abstandssensoren zum Einsatz, die in Supports 13, 14 gelagert sind. Die Supports 13, 14 sind in x-Richtung verschiebbar auf einem Tisch 10 gelagert. Auf dem Tisch 10 ist eine Verschubeinheit 11 gelagert, die in y-Richtung verschiebbar ist. An der Verschubeinheit 11 ist eine weitere Verschubeinheit 12 in z-Richtung verschiebbar befestigt. An der Verschubeinheit 12 ist ein Objektträger 15 befestigt, der zur Aufnahme des Prüfobjekts 1 und des Kalibrationsobjekts 4 ausgebildet ist. Somit können das Prüfobjekt 1 und das Kalibrationsobjekt 4 in bezug auf die Abstandssensoren 2, 2' dreidimensional bewegt werden.

Fig. 6 zeigt eine Variante des erfindungsgemäßen Messprinzips, bei der anstelle von zwei Sensoren zur Vermessung der Planparallelität des Prüfkörpers 1 nur ein Sensor 2 verwendet wird. Bei einer solchen Messanordnung ist es erforderlich, zwei Messungen durchzuführen, zwischen denen eine Relativbewegung zwischen dem Prüfobjekt 1 und dem Abstandssensor 2 ausgeführt wird, z.B. eine Drehung um 180°, wie durch den Pfeil P symbolisiert. Zusätzlich ist es erforderlich, eine Referenz zu definieren, die durch die Referenzflächen 4a, 4b des Kalibrationsobjekts 4 bereitgestellt wird. Dabei ist allerdings zu beachten, dass das Prüfobjekt 1 und das Kalibrationsobjekt 4 starr miteinander gekoppelt sein müssen, um auch nach der Relativbewegung die räumliche Orientierung zwischen Sensor 2 und dem Koordinatensystem des Prüfobjekts 1 feststellen zu können. Diese starre Kopplung wird durch ein Kopplungselement 5, wie eine Zwinge, erzielt, wobei die Verbindung lösbar ist.

## Patentansprüche

1. Verfahren zur Messung der Planparallelität von Flächen (1a, 1b) eines Prüfobjekts (1), umfassend das Vermessen der Flächen (1a, 1b) des Prüfobjekts (1) mittels zumindest eines Abstandssensors (2, 2'), **gekennzeichnet durch**
- das Bereitstellen eines Kalibrationsobjekts (4) mit Referenzflächen (4a, 4b), deren Ebenheit und Planparallelität über der notwendigen Messgenauigkeit liegt, vorzugsweise zumindest um den Faktor 5, noch bevorzugter um zumindest den Faktor 10 über der notwendigen Messgenauigkeit liegt,
- das Vermessen der Referenzflächen (4a, 4b) des Kalibrationsobjekts (4),
- das Ermitteln der Ausrichtung des zumindest einen Abstandssensors (2, 2') in Bezug auf das Kalibrationsobjekt (4) anhand der bei dem Vermessen der Referenzflächen (4a, 4b) des Kalibrationsobjekts (4) gewonnenen Messdaten;
- das Errechnen der Planparallelität der Flächen (1a, 1b) des Prüfobjekts (1) **durch** das Miteinander-in-Bezug-Setzen der Messungen der Flächen (1a, 1b) des Prüfobjekts (1) unter Berücksichtigung der ermittelten Ausrichtung des zumindest einen Abstandssensors (2, 2').

2. Verfahren nach Anspruch 1, **dadurch gekennzeichnet, dass** das Vermessen der Flächen (1a, 1b) des Prüfobjekts (1) und das Vermessen der Referenzflächen (4a, 4b) des Kalibrationsobjekts (4) mittels zweier Abstandssensoren (2, 2') erfolgt, wobei anhand der bei dem Vermessen der Referenzflächen (4a, 4b) des Kalibrationsobjekts (4) gewonnenen Messdaten die Ausrichtung der beiden Abstandssensoren (2, 2') zueinander ermittelt wird und die Planparallelität der Flächen (1a, 1b) des Prüfobjekts (1) durch das Miteinander-in-Bezug-Setzen der Messungen der Flächen (1a, 1b) des Prüfobjekts (1) unter Berücksichtigung der ermittelten Ausrichtung der Abstandssensoren (2, 2') zueinander errechnet wird.

3. Verfahren nach Anspruch 2, **dadurch gekennzeichnet, dass** das Vermessen der Referenzflächen (4a, 4b) des Kalibrationsobjekts (4) vor dem Vermessen eines ersten Prüfobjekts (1) durchgeführt wird und optional nach dem Vermessen mehrerer Prüfobjekte (1) wiederholt wird.

4. Verfahren nach Anspruch 1, **dadurch gekennzeichnet, dass** die Flächen (1a, 1b) des Prüfobjekts (1) und die Referenzflächen (4a, 4b) des Kalibrationsobjekts (4) gemeinsam mittels eines Abstandssensors (2) vermessen werden, wobei das Prüfobjekt (1) und das Kalibrationsobjekt (4) starr zueinander in einen räumlichen Bezug gesetzt werden, wobei eine Vermessung einer ersten Fläche (1a) des Prüfobjekts (1) und einer ersten Referenzfläche (4a) des Kalibrationsobjekts (4) durchgeführt wird, dann der Abstandssensor (2) relativ zum Prüfobjekt (1) und zum Kalibrationsobjekt (4) bewegt wird und anschließend eine Vermessung einer zweiten Fläche (1b) des Prüfobjekts (1) und einer zweiten Referenzfläche (4b) des Kalibrationsobjekts (4) durchgeführt wird.

5. Verfahren nach Anspruch 4, **dadurch gekennzeichnet, dass** das Prüfobjekt (1) und das Kalibrationsobjekt (4) starr zueinander in einen räumlichen Bezug gesetzt werden, indem sie durch ein Kopplungselement (5), wie eine Zwinge, lösbar miteinander verbunden werden

6. Verfahren nach einem der Ansprüche 1 bis 5, **dadurch gekennzeichnet, dass** die Abstandssensoren (2, 2') als Punktsensoren ausgebildet sind und zur Vermessung der Flächen (1a, 1b) des Prüfobjekts (1) und der Referenzflächen (4a, 4b) des Kalibrationsobjekts (4) einzelne Punkte der Flächen (1a, 1b) und der Referenzflächen (4a, 4b) vermessen werden, indem zwischen jeder Messung eine Relativbewegung zwischen den Abstandssensoren (2, 2') und den Flächen (1a, 1b) bzw. den Referenzflächen (4a, 4b) ausgeführt wird.

7. Verfahren nach Anspruch 6, **dadurch gekennzeichnet, dass** aus den erfassten Messpunkten der Flächen (1a, 1b) des Prüfobjekts (1) und der Referenzflächen (4a, 4b) des Kalibrationsobjekts (4) Ausgleichsebenen errechnet werden, die für die Ermittlung der Planparallelität der Flächen (1a, 1b) bzw. der Ermittlung der Ausrichtung der Abstandssensoren (2, 2') herangezogen werden.

8. Verfahren nach einem der Ansprüche 1 bis 5, **dadurch gekennzeichnet, dass** die Abstandssensoren (2, 2') als Flächensensoren ausgebildet sind.

9. Verfahren nach einem der vorhergehenden Ansprüche, **dadurch gekennzeichnet, dass** das Kalibrationsobjekt (4) als Quader ausgebildet ist und zwei gegenüberliegende Flächen als Referenzflächen (4a, 4b) ausgebildet sind.

## Claims

1. A method of measuring the plane parallelism of surfaces (1a, 1b) of a test object (1), comprising measuring the surfaces (1a, 1b) of the test object (1) by means of at least one distance sensor (2, 2'), **characterized by**
- providing a calibration object (4) having reference surfaces (4a, 4b) whose levelness and plane parallelism lie above the required measuring accuracy, preferably lying above the required measuring accuracy by at least the factor 5, more preferably by at least the factor 10,
- measuring the reference surfaces (4a, 4b) of the calibration object (4),
- determining the orientation of the at least one distance sensor (2, 2') relative to the calibration object (4) on the basis of the measured data obtained from measuring the reference surfaces (4a, 4b) of the calibration object (4);
- calculating the plane parallelism of the surfaces (1a, 1b) of the test object (1) by correlating the measurements of the surfaces (1a, 1b) of the test object (1), taking into account the determined orientation of the at least one distance sensor (2, 2').

2. A method according to claim 1, **characterized in that** measuring the surfaces (1a, 1b) of the test object (1) and measuring the reference surfaces (4a, 4b) of the calibration object (4) is done using two distance sensors (2, 2'), whereby, based on the measured data obtained from measuring the reference surfaces (4a, 4b) of the calibration object (4), the mutual orientation of the two distance sensors (2, 2') is determined and the plane parallelism of the surfaces (1a, 1b) of the test object (1) is calculated by correlating the measurements of the surfaces (1a, 1b) of the test object (1), taking into account the determined mutual orientation of the distance sensors (2, 2').

3. A method according to claim 2, **characterized in that** measuring the reference surfaces (4a, 4b) of the calibration object (4) is performed before measuring a first test object (1) and optionally is repeated after measuring several test objects (1).

4. A method according to claim 1, **characterized in that** the surfaces (1a, 1b) of the test object (1) and the reference surfaces (4a, 4b) of the calibration object (4) are measured together using a distance sensor (2), whereby the test object (1) and the calibration object (4) are brought into a rigid spatial relationship with each other, wherein a measurement of a first surface (1a) of the test object (1) and of a first reference surface (4a) of the calibration object (4) is performed, the distance sensor (2) is then moved relative to the test object (1) and to the calibration object (4) and, subsequently, a measurement of a second surface (1b) of the test object (1) and of a second reference surface (4b) of the calibration object (4) is performed.

5. A method according to claim 4, **characterized in that** the test object (1) and the calibration object (4) are brought into a rigid spatial relationship with each other by detachably interconnecting them via a coupling element (5) such as a clamp.

6. A method according to any of claims 1 to 5, **characterized in that** the distance sensors (2, 2') are designed as point sensors and, for measuring the surfaces (1a, 1b) of the test object (1) and the reference surfaces (4a, 4b) of the calibration object (4), individual points of the surfaces (1a, 1b) and of the reference surfaces (4a, 4b) are measured by performing, between each measurement, a relative motion between the distance sensors (2, 2') and the surfaces (1a, 1b) or the reference surfaces (4a, 4b), respectively.

7. A method according to claim 6, **characterized in that** balance planes are calculated from the detected measuring points of the surfaces (1a, 1b) of the test object (1) and of the reference surfaces (4a, 4b) of the calibration object (4), which balance planes are used for determining the plane parallelism of the surfaces (1a, 1b) and for determining, respectively, the orientation of the distance sensors (2, 2').

8. A method according to any of claims 1 to 5, **characterized in that** the distance sensors (2, 2') are designed as surface sensors.

9. A method according to any of the preceding claims, **characterized in that** the calibration object (4) is configured as a cuboid and two opposing surfaces are designed as reference surfaces (4a, 4b).

## Revendications

1. Procédé pour mesurer le parallélisme entre des surfaces planes (1a, 1b) d'un objet à contrôler (1), comprenant le mesurage des surfaces (1a, 1b) de l'objet à contrôler au moyen d'au moins un capteur de distance (2, 2'), **caractérisé par**
- la fourniture d'un objet de calibrage (4) muni de surfaces de référence (4a, 4b) dont la planéité et le parallélisme sont supérieurs à la précision de mesure nécessaire, de préférence au moins du facteur 5, et de façon encore plus préférée supérieurs à la précision de mesure nécessaire au moins du facteur 10 ;
- le mesurage des surfaces de référence (4a, 4b) de l'objet de calibrage (4) ;
- la détermination de l'orientation dudit au moins un capteur de distance (2, 2') par rapport à l'objet de calibrage (4) en se basant sur les données de mesure obtenues lors du mesurage des surfaces de référence (4a, 4b) de l'objet de calibrage (4) ;
- le calcul du parallélisme des surfaces planes (1a, 1b) de l'objet à contrôler (1) par la mise en relation mutuelle des mesures des surfaces (1a, 1b) de l'objet à contrôler (1) en prenant en compte l'orientation déterminée dudit au moins un capteur de distance (2, 2').

2. Procédé selon la revendication 1, **caractérisé en ce que** le mesurage des surfaces (1a, 1b) de l'objet à contrôler (1) et le mesurage des surfaces de référence (4a, 4b) de l'objet de calibrage (4) s'effectuent au moyen de deux capteurs de distance (2, 2'), et en se basant sur les données de mesure obtenues lors du mesurage des surfaces de référence (4a, 4b) de l'objet de calibrage (4), on détermine l'orientation des deux capteurs de distance (2, 2') et on calcule le parallélisme des surfaces planes (1a, 1b) de l'objet à contrôler (1) par la mise en relation mutuelle des mesures des surfaces (1a, 1b) de l'objet à contrôler (1) en prenant en compte l'orientation déterminée des capteurs de distance (2, 2') l'un par rapport à l'autre.

3. Procédé selon la revendication 2, **caractérisé en ce que** l'on effectue le mesurage des surfaces de référence (4a, 4b) de l'objet de calibrage (4) avant le mesurage d'un premier objet à contrôler (1) et on le répète optionnellement après le mesurage de plusieurs objets à contrôler (1).

4. Procédé selon la revendication 1, **caractérisé en ce que** l'on mesure conjointement les surfaces (1a, 1b) de l'objet à contrôler (1) et les surfaces de référence (4a, 4b) de l'objet de calibrage (4) au moyen d'un capteur de distance (2), l'objet à contrôler (1) et l'objet de calibrage (4) étant mis en relation fixe dans l'espace l'un par rapport à l'autre, en effectuant un mesurage d'une première surface (1a) de l'objet à contrôler (1) et d'une première surface de référence (4a) de l'objet de calibrage (4), puis on fait déplacer le capteur de distance (2) par rapport à l'objet à contrôler (1) et à l'objet de calibrage (4), et ensuite on effectue un mesurage d'une seconde surface (1b) de l'objet à contrôler (1) et d'une seconde surface de référence (4b) de l'objet de calibrage (4).

5. Procédé selon la revendication 4, **caractérisé en ce que** l'on met en relation fixe dans l'espace l'un par rapport à l'autre l'objet à contrôler (1) et l'objet de calibrage (4), en les reliant de façon détachable l'un à l'autre par un élément de couplage (5), tel qu'une pince.

6. Procédé selon l'une des revendications 1 à 5, **caractérisé en ce que** l'on réalise les capteurs de distance (2, 2') sous forme de capteurs de points, et **en ce que** pour mesurer les surfaces (1a, 1b) de l'objet à contrôler (1) et les surfaces de référence (4a, 4b) de l'objet de calibrage (4), on mesure des points individuels des surfaces (1a, 1b) et des surfaces de référence (4a, 4b), en effectuant entre chaque mesure un mouvement relatif entre les capteurs de distance (2, 2') et les surfaces (1a, 1b) ou les surfaces de référence (4a, 4b).

7. Procédé selon la revendication 6, **caractérisé en ce qu'**à partir des points de mesure saisis des surfaces (1a, 1b) de l'objet à contrôler (1) et des surfaces de référence (4a, 4b) de l'objet de calibrage (4), on calcule des plans de compensation auxquels on a recours pour la détermination du parallélisme des surfaces planes (1a, 1b) ou pour la détermination de l'orientation des capteurs de distance (2, 2').

8. Procédé selon l'une des revendications 1 à 5, **caractérisé en ce que** les capteurs de distance (2, 2') sont réalisés sous forme de capteurs de surface.

9. Procédé selon l'une des revendications précédentes, **caractérisé en ce que** l'objet de calibrage (4) est réalisé sous forme de parallélépipède, et **en ce que** deux surfaces opposées sont réalisées sous forme de surfaces de référence (4a, 4b).
